# EUROPÄISCHE PATENTSCHRIFT

(11) **EP 2 279 360 B1**
(45) Veröffentlichungstag und Bekanntmachung des Hinweises auf die Patenterteilung: **05.12.2012**
(21) Anmeldenummer: 09753705.4
(22) Anmeldetag: 23.03.2009
(51) Int. Cl.: F16H 3/093

(54) **MEHRGÄNGIGES LASTSCHALTGETRIEBE**
MULTI-GEAR POWERSHIFT TRANSMISSION
BOITE DE VITESSES COUPLABLE SOUS CHARGE A PLUSIEURS RAPPORTS

(30) Priorität: 29.05.2008 DE 102008002069
(43) Veröffentlichungstag der Anmeldung: 02.02.2011
(73) Patentinhaber: ZF Friedrichshafen AG, 88038 Friedrichshafen (DE)
(72) Erfinder: MORRISON, Robert, 88069 Tettnang (DE); MÜHLBACH, Vladimir, 78479 Reichenau (DE)
(86) Internationale Anmeldenummer: PCT/EP2009/053354
(87) Internationale Veröffentlichungsnummer: WO 2009/144050

(56) Entgegenhaltungen:
- WO-A-2005/071286
- DE-A1- 10 330 157
- DE-B- 1 053 326
- US-A- 3 858 455
- US-A- 5 249 475

## Beschreibung

Die Erfindung betrifft ein mehrgängiges Lastschaltgetriebe nach der im Oberbegriff von Anspruch 1 näher definierten Art.

Mehrgängige Lastschaltgetriebe, insbesondere für Stapler, werden häufig, je nach Einsatzzweck, mit zwei Gängen in Vorwärtsfahrt und zwei Gängen in Rückwärtsfahrt oder drei Gängen in Vorwärtsfahrt und drei Gängen in Rückwärtsfahrt benötigt.

Die DE 103 30 157 A1 offenbart ein mehrgängiges Lastschaltgetriebe für Baumaschinen, insbesondere für Baggerlader und Tele-Handler, welches vier Vorwärts- und zwei Rückwärtsgänge aufweist.

Die US 3858455 A1 void old nächiter Stand der Technik angesler und offenhart di Merkunal des Oberbegriffs des Anspruch 1.

Der vorliegenden Erfindung liegt die Aufgabe zugrunde, ein Lastschaltgetriebe, insbesondere für Stapler, zu schaffen, welches auf einfache Weise als Getriebe mit drei Vorwärts- und drei Rückwärtsgängen ausgebildet sein kann.

Die Aufgabe wird mit einem, auch die kennzeichnenden Merkmale des Hauptanspruchs aufweisenden, gattungsgemäßen mehrgängigen Lastschaltgetriebe gelöst.

Durch den Aufbau des Lastschaltgetriebes mit zwei Vorwärts- und zwei Rückwärtsgängen besteht die Möglichkeit, durch Hinzufügen einer einzigen Kupplung mit zugehöriger Vorgelegewelle und Fest- und Losrad aus dem Lastschaltgetriebe mit zwei Vorwärts- und zwei Rückwärtsgängen ein Lastschaltgetriebe mit drei Vorwärts- und drei Rückwärtsgängen zu bilden.

Beim nicht beauspruchten Lastschaltgetriebe mit zwei Vorwärts- und zwei Rückwärtsgängen treibt ein Antriebsmotor, beispielsweise ein Verbrennungsmotor, über einen hydrodynamischen Drehmomentwandler eine Antriebswelle an. Die Antriebswelle ist mit einem Festrad drehfest verbunden, welches mit einer Kupplung, einem Losrad und der Antriebswelle eine Vorwärtsgang-Einheit bildet. Ein Festrad, eine Kupplung und ein Losrad sowie eine Vorgelegewelle bilden eine Rückwärtsgang-Einheit, wobei das Festrad der Rückwärtsgang-Einheit mit dem Festrad der Vorwärtsgang-Einheit kämmt. Eine weitere Vorgelegewelle, ein Festrad, eine Kupplung und ein Losrad bilden eine erste Gang-Einheit, wobei das Festrad der ersten Gang-Einheit mit dem Losrad der Rückwärtsgang-Einheit und dem Losrad der Vorwärtsgang-Einheit kämmt. Eine Abtriebswelle, ein Festrad, eine Kupplung und ein Losrad bilden die zweite Gang-Einheit, wobei das Losrad der zweiten Gang-Einheit mit dem Festrad der ersten Gang-Einheit und das Festrad der zweiten Gang-Einheit mit dem Losrad der ersten Gang-Einheit kämmt. Dadurch ist es möglich, ein sehr kompaktes Lastschaltgetriebe mit zwei Vorwärts- und zwei Rückwärtsgängen zu schaffen. Um aus dem Lastschaltgetriebe mit den zwei Vorwärts- und zwei Rückwärtsgängen ein beauspruchtes Lastschaltgetriebe mit drei Vorwärts- und drei Rückwärtsgängen zu bilden, wird die Vorgelegewelle der zweiten Gang-Einheit zusätzlich mit einem zweiten Festrad drehfest verbunden und das Getriebe mit einer dritten Gang-Einheit, bestehend aus einem Losrad, einer Vorgelegewelle, einer Kupplung und einem Festrad, erweitert. Das Festrad der dritten Gang-Einheit kämmt mit dem Losrad der zweiten Gang-Einheit und das zweite Festrad der zweiten Gang-Einheit kämmt mit dem Losrad der dritten Gang-Einheit. Die Vorgelegewelle der zweiten Gang-Einheit kann als Abtriebswelle verwendet werden, es besteht jedoch auch die Möglichkeit, zur Bildung eines Achsversatzes das erste Festrad der zweiten Gang-Einheit mit einem Festrad, welches drehfest auf einer Abtriebswelle gehalten ist, in Wirkverbindung zu bringen, wodurch die Abtriebswelle einen Achsabstand zur Vorgelegewelle der zweiten Gang-Einheit aufweist.

Weitere Merkmale sind der Figuren-Beschreibung zu entnehmen.

Es zeigen:

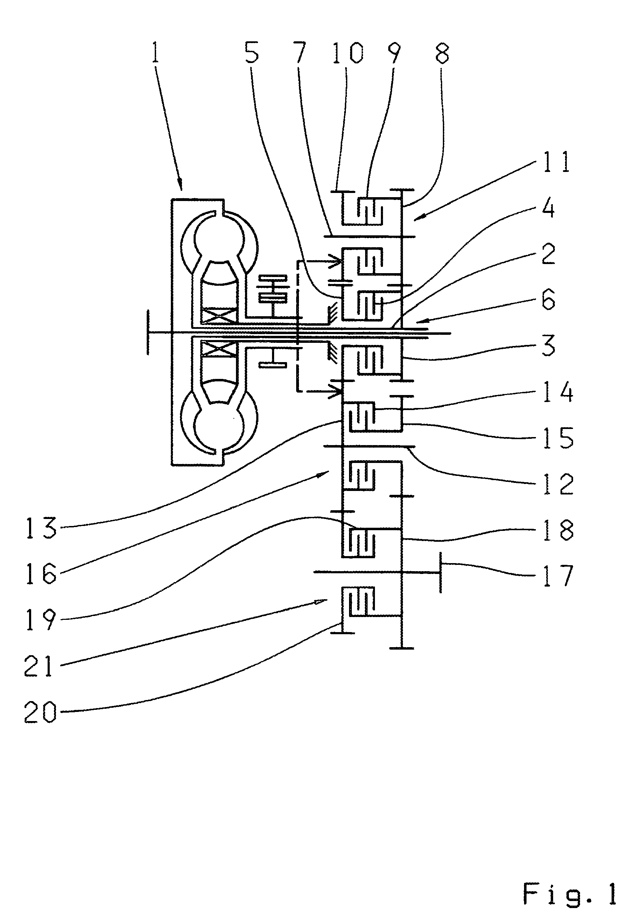

- Fig. 1: ein nicht beauspruchtes Getriebeschema eines Lastschaltgetriebes mit zwei Vorwärts- und zwei Rückwärtsgängen und

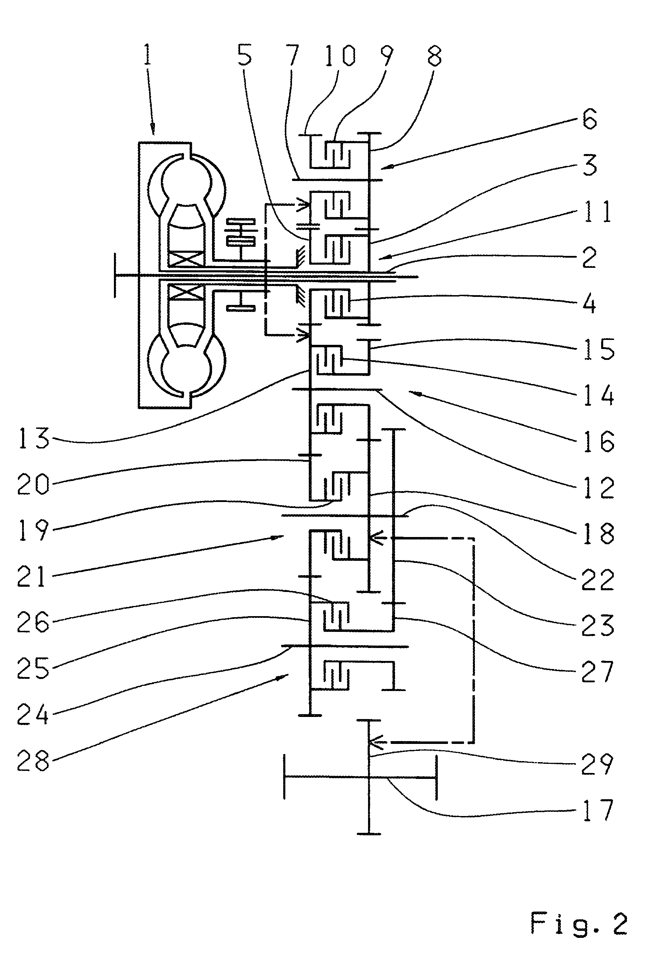

- Fig. 2: ein Getriebeschema eines Lastschaltgetriebes mit drei Vorwärts- und drei Rückwärtsgängen.

### Fig. 1:

Ein hydrodynamischer Drehmomentwandler 1 treibt über eine Antriebswelle 2 ein Festrad 3 an. Das Festrad 3 kann über eine Kupplung 4 mit einem Losrad 5 drehfest verbunden werden. Die Antriebswelle 2, das Festrad 3, die Kupplung 4 und das Losrad 5 bilden die Vorwärtsgang-Einheit 6. Eine Vorgelegewelle 7, ein Festrad 8, eine Kupplung 9 und ein Losrad 10 bilden die Rückwärtsgang-Einheit 11. Das Festrad 8 kämmt mit dem Festrad 3. Eine weitere Vorgelegewelle 12, ein Festrad 13, eine Kupplung 14 und ein Losrad 15 bilden die erste Gang-Einheit 16. Die Abtriebswelle 17, das Festrad 18, die Kupplung 19 und das Losrad 20 bilden die zweite Gang-Einheit 21. Das Festrad 13 kämmt mit dem Losrad 20, dem Losrad 10 und dem Losrad 5.

Um den ersten Gang in Vorwärtsfahrtrichtung zu schalten, werden die Kupplungen 4 und 14 im Schließsinne und die Kupplungen 9 und 19 im Öffnungssinne betätigt. Um den zweiten Gang in Vorwärtsfahrtrichtung zu schalten, bleibt die Kupplung 4 im Schließsinne und die Kupplung 9 im Öffnungssinne betätigt, und die Kupplung 19 wird im Schließsinne und die Kupplung 14 im Öffnungssinne betätigt. Um einen ersten Gang in einer Rückwärtsfahrtrichtung zu schalten, wird die Kupplung 9 im Schließsinne und die Kupplung 4 im Öffnungssinne betätigt, und die Kupplung 14 im Schließsinne und die Kupplung 19 im Öffnungssinne betätigt.

### Fig. 2:

Ein hydrodynamischer Drehmomentwandler 1 treibt die Antriebswelle 2 an. Drehfest mit der Antriebswelle 2 ist ein Festrad 3 verbunden, welches koaxial zu einem Losrad 5 angeordnet ist. Die Antriebswelle 2, das Festrad 3 und das Losrad 5 sowie die Kupplung 4 bilden die Rückwärtsgang-Einheit 11. Die Vorgelegewelle 7, das Festrad 8, die Kupplung 9 und das Losrad 10 bilden die Vorwärtsgang-Einheit 6. Die weitere Vorgelegewelle 12, das Festrad 13, die Kupplung 14 und das Losrad 15 bilden die erste Gang-Einheit 16. Die Vorgelegewelle 22, das Festrad 18, die Kupplung 19, das Losrad 20 und das zweite Festrad 23 bilden die zweite Gang-Einheit 21. Die Vorgelegewelle 24, das Festrad 25, die Kupplung 26, das Losrad 27 bilden die dritte Gang-Einheit 28. Die Abtriebswelle 17 ist drehfest mit dem Festrad 29 verbunden. Das Festrad 20 kämmt einerseits mit dem Festrad 25 und dem Festrad 13. Das Festrad 13 kämmt mit dem Losrad 10 und dem Losrad 5. Das Festrad 18 kämmt mit dem Losrad 15 und dem Festrad 29. Das zweite Festrad 23 kämmt mit dem Losrad 27.

Um den ersten Gang in Vorwärtsfahrtrichtung zu schalten, werden die Kupplungen 9 und 26 im Schließsinne und die Kupplungen 19, 14 im Öffnungssinne betätigt. Um den zweiten Gang in Vorwärtsfahrtrichtung zu schalten, werden die Kupplungen 9 und 14 im Schließsinne und die Kupplungen 4, 19 und 26 im Öffnungssinne betätigt. Um den dritten Gang in Vorwärtsfahrtrichtung zu schalten, werden die Kupplungen 9 und 19 im Schließsinne und die Kupplungen 26, 14 und 4 im Öffnungssinne betätigt. Um den ersten Gang in Rückwärtsfahrtrichtung zu schalten, werden die Kupplungen 4 und 26 im Schließsinne und die Kupplungen 9, 14 und 19 im Öffnungssinne betätigt. Um den zweiten Gang in Rückwärtsfahrtrichtung zu schalten, werden die Kupplungen 4 und 14 im Schließsinne und die Kupplungen 9, 19 und 26 im Öffnungssinne betätigt. Um den dritten Gang in Rückwärtsfahrtrichtung zu schalten, werden die Kupplungen 4 und 19 im Schließsinne und die Kupplungen 9, 14 und 26 im Öffnungssinne betätigt.

Es besteht auch die Möglichkeit, die Vorgelegewelle 22 als Abtriebswelle zu verwenden, wodurch die Abtriebswelle 17 und das Festrad 29 entfällt. Somit besteht die Möglichkeit, ausschließlich durch Verwendung eines weiteren Festrades 23, der Vorgelegewelle 24, des Festrades 25, der Kupplung 26 und des Losrades 27 aus dem Lastschaltgetriebe mit zwei Gängen in Vorwärtsfahrtrichtung und zwei Gängen in Rückwärtsfahrtrichtung ein Lastschaltgetriebe mit drei Gängen in Vorwärtsfahrtrichtung und drei Gängen in Rückwärtsfahrtrichtung zu schaffen.

### Bezugszeichen

- 1: hydrodynamischer Drehmomentwandler
- 2: Antriebswelle
- 3: Festrad
- 4: Kupplung
- 5: Losrad
- 6: Vorwärtsgang-Einheit
- 7: Vorgelegewelle
- 8: Festrad
- 9: Kupplung
- 10: Losrad
- 11: Rückwärtsgang-Einheit
- 12: weitere Vorgelegewelle
- 13: Festrad
- 14: Kupplung
- 15: Losrad
- 16: erste Gang-Einheit
- 17: Abtriebswelle
- 18: Festrad
- 19: Kupplung
- 20: Losrad
- 21: zweite Gang-Einheit
- 22: Vorgelegewelle
- 23: zweites Festrad
- 24: Vorgelegewelle
- 25: Festrad
- 26: Kupplung
- 27: Losrad
- 28: dritte Gang-Einheit
- 29: Festrad

## Patentansprüche

1. Mehrgängiges Lastschaltgetriebe für Arbeitsmaschinen, insbesondere für Stapler, mit einem Drehmomentwandler (1), einer Antriebswelle (2), einer Abtriebswelle (17) und mehreren Vorgelegewellen (7, 12, 22, 24) mit auf den Wellen verteilten Losrädern (5, 10, 15, 20, 27), Festrädern (3, 8, 13, 18, 23, 25, 29) und Schaltkupplungen (4, 9, 14, 19, 26), umfassend drei Vorwärts- und drei Rückwärtsgänge, **dadurch gekennzeichnet , dass** die Antriebswelle (2) mit einem Festrad (3) drehfest verbunden ist, welches mit einem Fest-rad (8) einer Vorwärtsgang-Einheit (6), bestehend aus dem letztgenannten Festrad (8), einer Kupplung (9) und einem Losrad (10), kämmt, das Festrad (3) der Antriebswelle (2) mit einer Kupplung (4) und einem koaxial zum Festrad (3) der Antriebswelle (2) angeordneten Losrad (5) eine Rückwärtsgang-Einheit (11) bildet, eine erste weitere Vorgelegewelle (12) mit einem Festrad (13) drehfest verbunden ist, welches einerseits mit dem koaxial zum Festrad (3) der Antriebswelle (2) angeordneten Losrad (5) und andererseits mit dem Losrad (10) der Vorwärtsgang-Einheit (6) kämmt, das Festrad (13) der ersten weiteren Vorgelegewelle (12) mit einer Kupplung (14) und einem koaxial zum Festrad (13) angeordneten Losrad (15) eine erste Gang-Einheit (16) bildet, und eine zweite weitere Vorgelegewelle (22) drehfest mit einem ersten Festrad (18) verbunden ist, welches mit dem Losrad (15) der ersten Gang-Einheit (16) kämmt, und das erste Festrad (18) der zweiten weiteren Vorgelegewelle (22) mit einem zweiten Festrad (23) mit einer Kupplung (19) und einem koaxial zum ersten Festrad (18) und zweiten Festrad (23) angeordneten Losrad (20) eine zweite Gang-Einheit (21) bildet, wobei das Losrad (20) der zweiten Gang-Einheit (21) mit dem Festrad (13) der ersten Gang-Einheit (16) kämmt, und das zweite Festrad (23) der zweiten Gang-Einheit (21) mit einem Losrad (27) einer dritten Gang-Einheit (28) kämmt, und das Losrad (20) der zweiten Gang-Einheit (21) mit einem Festrad (25) der dritten Gang-Einheit (28) kämmt, und dass letzgenannte Losrad (27) eine Kupplung (26) und dass letzgenannte Festrad (25) und eine dritte weitere Vorgelegewelle (24) die dritte Gang-Einheit (28) bilden, und die Abtriebswelle (17) mit einem Festrad (29) drehfest verbunden ist, wobei dieses Festrad (29) mit dem ersten Festrad (18) der zweiten Gang-Einheit (21) kämmt.

2. Mehrgängiges Lastschaltgetriebe nach Anspruch 1, dadurch **ge** - **kennzeichnet**, dass mittels der Kupplung (4) der Rückwärtsgang-Einheit (11) das Festrad (3) der Rückwärtsgang-Einheit (11) mit dem Losrad (5) der Rückwärtsgang-Einheit (11) verbindbar ist, mittels der Kupplung (9) der Vorwärtsgang-Einheit (6) das Festrad (8) der Vorwärtsgang-Einheit (6) mit dem Losrad (10) der Vorwärtsgang-Einheit (6) verbindbar ist, mittels der Kupplung (14) der ersten Gang-Einheit (16) das Festrad (13) der ersten Gang-Einheit (16) mit dem Losrad (15) der ersten Gang-Einheit (16) verbindbar ist, mittels der Kupplung (19) der zweiten Gang-Einheit (21) die Festräder (18, 23) der zweiten Gang-Einheit (21) mit dem Losrad (20) der zweiten Gang-Einheit (21) verbindbar sind und mittels der Kupplung der dritten Gang-Einheit (28) das Festrad (25) der dritten Gang-Einheit (28) mit dem Losrad (27) der dritten Gang-Einheit (28) verbindbar ist.

3. Mehrgängiges Lastschaltgetriebe nach Anspruch 2, **dadurch gekennzeichnet, dass** ein erster Gang in einer Vorwärtsfahrtrichtung durch Schließen der Kupplung (9) der Vorwärtsgang-Einheit (6) und der Kupplung (26) der dritten Gang-Einheit (28) und Öffnen der Kupplung (4) der Rückwärtsgang-Einheit (11) und den anderen Kupplungen geschaltet ist.

4. Mehrgängiges Lastschaltgetriebe nach Anspruch 2, dadurch **ge** - **kennzeichnet**, dass ein zweiter Gang in einer Vorwärtsfahrtrichtung durch Schließen der Kupplung (9) der Vorwärtsgang-Einheit (6) und der Kupplung (14) der ersten Gang-Einheit (16) und Öffnen der weiteren Kupplungen geschaltet ist.

5. Mehrgängiges Lastschaltgetriebe nach Anspruch 2, dadurch **ge - kennzeichnet,** dass ein dritter Gang in einer Vorwärtsfahrtrichtung durch Schließen der Kupplung (9) der Vorwärtsgang-Einheit (6) und der Kupplung (19) der zweiten Gang-Einheit (21) und Öffnen der weiteren Kupplungen geschaltet ist.

6. Mehrgängiges Lastschaltgetriebe nach Anspruch 2, **dadurch gekennzeichnet, dass** ein erster Gang in einer Rückwärtsfahrtrichtung durch Schließen der Kupplung (4) der Rückwärtsgang-Einheit (11) und der Kupplung (26) der dritten Gang-Einheit (28) und Öffnen der weiteren Kupplungen geschaltet ist.

7. Mehrgängiges Lastschaltgetriebe nach Anspruch 2, **dadurch gekennzeichnet, dass** ein dritter Gang in einer Rückwärtsfahrtrichtung durch Schließen der Kupplung (4) der Rückwärtsgang-Einheit (11) und der Kupplung (19) der zweiten Gang-Einheit (21) und Öffnen der weiteren Kupplungen geschaltet ist.

## Claims

1. Multi-gear powershift transmission for working machines, in particular for lifting trucks, having a torque converter (1), having a drive input shaft (2), having a drive output shaft (17) and having a plurality of countershafts (7, 12, 22, 24) with loose gears (5, 10, 15, 20, 27), fixed gears (3, 8, 13, 18, 23, 25, 29) and shift clutches (4, 9, 14, 19, 26) distributed on the shafts, comprising three forward gears and three reverse gears, **characterized in that** the drive input shaft (2) is rotationally conjointly connected to a fixed gear (3) which meshes with a fixed gear (8) of a forward gear unit (6) composed of the latter fixed gear (8), of a clutch (9) and of a loose gear (10), the fixed gear (3) of the drive input shaft (2) forms, together with a clutch (4) and a loose gear (5) arranged coaxially with respect to the fixed gear (3) of the drive input shaft (2), a reverse gear unit (11), a first further countershaft (12) is rotationally conjointly connected to a fixed gear (13) which meshes firstly with the loose gear (5) arranged coaxially with respect to the fixed gear (3) of the drive input shaft (2) and secondly with the loose gear (10) of the forward gear unit (6), the fixed gear (13) of the first further countershaft (12) forms, together with a clutch (14) and a loose gear (15) arranged coaxially with respect to the fixed gear (13), a first gear unit (16), and a second further countershaft (22) is rotationally conjointly connected to a first fixed gear (18) which meshes with the loose gear (15) of the first gear unit (16), and the first fixed gear (18) of the second further countershaft (22) forms, together with a second fixed gear (23) with a clutch (19) and a loose gear (20) arranged coaxially with respect to the first fixed gear (18) and second fixed gear (23), a second gear unit (21), wherein the loose gear (20) of the second gear unit (21) meshes with the fixed gear (13) of the first gear unit (16), and the second fixed gear (23) of the second gear unit (21) meshes with a loose gear (27) of a third gear unit (28), and the loose gear (20) of the second gear unit (21) meshes with a fixed gear (25) of the third gear unit (28), and the latter loose gear (27), a clutch (26) and the latter fixed gear (25) and a third further countershaft (24) form the third gear unit (28), and the drive output shaft (17) is rotationally conjointly connected to a fixed gear (29), wherein said fixed gear (29) meshes with the first fixed gear (18) of the second gear unit (21).

2. Multi-gear powershift transmission according to Claim 1, **characterized in that** the fixed gear (3) of the reverse gear unit (11) can be connected to the loose gear (5) of the reverse gear unit (11) by means of the clutch (4) of the reverse gear unit (11), the fixed gear (8) of the forward gear unit (6) can be connected to the loose gear (10) of the forward gear unit (6) by means of the clutch (9) of the forward gear unit (6), the fixed gear (13) of the first gear unit (16) can be connected to the loose gear (15) of the first gear unit (16) by means of the clutch (14) of the first gear unit (16), the fixed gears (18, 23) of the second gear unit (21) can be connected to the loose gear (20) of the second gear unit (21) by means of the clutch (19) of the second gear unit (21), and the fixed gear (25) of the third gear unit (28) can be connected to the loose gear (27) of the third gear unit (28) by means of the clutch of the third gear unit (28).

3. Multi-gear powershift transmission according to Claim 2, **characterized in that** a first gear in a forward direction of travel is engaged by closing the clutch (9) of the forward gear unit (6) and the clutch (26) of the third gear unit (28) and opening the clutch (4) of the reverse gear unit (11) and the other clutches.

4. Multi-gear powershift transmission according to Claim 2, **characterized in that** a second gear in a forward direction of travel is engaged by closing the clutch (9) of the forward gear unit (6) and the clutch (14) of the first gear unit (16) and opening the other clutches.

5. Multi-gear powershift transmission according to Claim 2, **characterized in that** a third gear in a forward direction of travel is engaged by closing the clutch (9) of the forward gear unit (6) and the clutch (19) of the second gear unit (21) and opening the other clutches.

6. Multi-gear powershift transmission according to Claim 2, **characterized in that** a first gear in a reverse direction of travel is engaged by closing the clutch (4) of the reverse gear unit (11) and the clutch (26) of the third gear unit (28) and opening the other clutches.

7. Multi-gear powershift transmission according to Claim 2, **characterized in that** a third gear in a reverse direction of travel is engaged by closing the clutch (4) of the reverse gear unit (11) and the clutch (19) of the second gear unit (21) and opening the other clutches.

## Revendications

1. Boîte de vitesses à changement de vitesses en charge à plusieurs rapports pour engins de travail, en particulier pour chariots élévateurs, comprenant un convertisseur de couple (1), un arbre d'entraînement (2), un arbre de sortie (17) et plusieurs arbres secondaires (7, 12, 22, 24) avec des pignons fous (5, 10, 15, 20, 27) répartis sur les arbres, des pignons fixes (3, 8, 13, 18, 23, 25, 29) et des embrayages à changement de vitesse (4, 9, 14, 19, 26), comprenant trois rapports de marche avant et trois rapports de marche arrière, **caractérisée en ce que** l'arbre d'entraînement (2) est connecté de manière solidaire en rotation à un pignon fixe (3) qui s'engrène avec un pignon fixe (8) d'une unité de rapport de marche avant (6), constituée dudit pignon fixe (8), d'un embrayage (9) et d'un pignon fou (10), le pignon fixe (3) de l'arbre d'entraînement (2) forme avec un embrayage (4) et un pignon fou (5) disposé coaxialement par rapport au pignon fixe (3) de l'arbre d'entraînement (2) une unité de rapport de marche arrière (11), un premier arbre secondaire supplémentaire (12) est connecté de manière solidaire en rotation à un pignon fixe (13) qui s'engrène d'une part avec le pignon fou (5) disposé coaxialement par rapport au pignon fixe (3) de l'arbre d'entraînement (2) et d'autre part avec le pignon fou (10) de l'unité de rapport de marche avant (6), le pignon fixe (13) du premier arbre secondaire supplémentaire (12) forme avec un embrayage (14) et un pignon fou (15) disposé coaxialement au pignon fixe (13) une première unité de rapport (16) et un deuxième arbre secondaire supplémentaire (22) est connecté de manière solidaire en rotation à un premier pignon fixe (18), qui s'engrène avec le pignon fou (15) de la première unité de rapport (16), et le premier pignon fixe (18) du deuxième arbre secondaire supplémentaire (22) forme avec un deuxième pignon fixe (23) avec un embrayage (19) et un pignon fou (20) disposé coaxialement au premier pignon fixe (18) et au deuxième pignon fixe (23) une deuxième unité de rapport (21), le pignon fou (20) de la deuxième unité de rapport (21) s'engrenant avec le pignon fixe (13) de la première unité de rapport (16), et le deuxième pignon fixe (23) de la deuxième unité de rapport (21) s'engrène avec un pignon fou (27) d'une troisième unité de rapport (28), et le pignon fou (20) de la deuxième unité de rapport (21) s'engrène avec un pignon fixe (25) de la troisième unité de rapport (28), et ledit pignon fou (27) forme un embrayage (26) et ledit pignon fixe (25) et un troisième arbre secondaire supplémentaire (24) forment la troisième unité de rapport (28), et l'arbre de sortie (17) est connecté de manière solidaire en rotation à un pignon fixe (29), ce pignon fixe (29) s'engrenant avec le premier pignon fixe (18) de la deuxième unité de rapport (21).

2. Boîte de vitesses à changement de vitesses en charge à plusieurs rapports selon la revendication 1, **caractérisée en ce qu'**au moyen de l'embrayage (4) de l'unité de rapport de marche arrière (11), le pignon fixe (3) de l'unité de rapport de marche arrière (11) peut être connecté au pignon fou (5) de l'unité de rapport de marche arrière (11), au moyen de l'embrayage (9) de l'unité de rapport de marche avant (6), le pignon fixe (8) de l'unité de marche avant (6) peut être connecté au pignon fou (10) de l'unité de rapport de marche avant (6), au moyen de l'embrayage (14) de la première unité de rapport (16), le pignon fixe (13) de la première unité de rapport (16) peut être connecté au pignon fou (15) de la première unité de rapport (16), au moyen de l'embrayage (19) de la deuxième unité de rapport (21), les pignons fixes (18, 23) de la deuxième unité de rapport (21) peuvent être connectés au pignon fou (20) de la deuxième unité de rapport (21) et au moyen de l'embrayage de la troisième unité de rapport (28), le pignon fixe (25) de la troisième unité de rapport (28) peut être connecté au pignon fou (27) de la troisième unité de rapport (28).

3. Boîte de vitesses à changement de vitesses en charge à plusieurs rapports selon la revendication 2, **caractérisée en ce qu'**un premier rapport est commuté dans une direction de marche avant par fermeture de l'embrayage (9) de l'unité de rapport de marche avant (6) et de l'embrayage (26) de la troisième unité de rapport (28) et par ouverture de l'embrayage (4) de l'unité de rapport de marche arrière (11) et des autres embrayages.

4. Boîte de vitesses à changement de vitesses en charge à plusieurs rapports selon la revendication 2, **caractérisée en ce qu'**un deuxième rapport est commuté dans une direction de marche avant par fermeture de l'embrayage (9) de l'unité de rapport de marche avant (6) et de l'embrayage (14) de la première unité de rapport (16) et ouverture des autres embrayages.

5. Boîte de vitesses à changement de vitesses en charge à plusieurs rapports selon la revendication 2, **caractérisée en ce qu'**un troisième rapport est commuté dans une direction de marche avant par fermeture de l'embrayage (9) de l'unité de rapport de marche avant (6) et de l'embrayage (19) de la deuxième unité de rapport (21) et ouverture des autres embrayages.

6. Boîte de vitesses à changement de vitesses en charge à plusieurs rapports selon la revendication 2, **caractérisée en ce qu'**un premier rapport est commuté dans une direction de conduite de marche arrière par fermeture de l'embrayage (4) de l'unité de rapport de marche arrière (11) et de l'embrayage (26) de la troisième unité de rapport (28) et ouverture des autres embrayages.

7. Boîte de vitesses à changement de vitesses en charge à plusieurs rapports selon la revendication 2, **caractérisée en ce qu'**un troisième rapport est commuté dans une direction de conduite de marche arrière par fermeture de l'embrayage (4) de l'unité de rapport de marche arrière (11) et de l'embrayage (19) de la deuxième unité de rapport (21) et ouverture des autres embrayages.
